# EUROPÄISCHE PATENTSCHRIFT

(11) **EP 1 391 347 B1**
(45) Veröffentlichungstag und Bekanntmachung des Hinweises auf die Patenterteilung: **23.04.2008**
(21) Anmeldenummer: 03102332.8
(22) Anmeldetag: 29.07.2003
(51) Int. Cl.: B60Q 1/068, B60Q 1/076, B60Q 1/12

(54) **Scheinwerfer für Fahrzeuge**
Headlamp for vehicle
Projecteur pour véhicule

(30) Priorität: 23.08.2002 DE 10238792
(43) Veröffentlichungstag der Anmeldung: 25.02.2004
(73) Patentinhaber: Hella KGaA Hueck & Co., 59552 Lippstadt (DE)
(72) Erfinder: Krukenbaum, Friedrich, 59069 Hamm (DE); Willeke, Franz-Georg, 59609 Anröchte (DE)

(56) Entgegenhaltungen:
- EP-A- 0 081 399
- EP-A- 1 120 310
- DE-A1- 10 045 943
- FR-A- 2 424 157

## Beschreibung

Die Erfindung betrifft einen Scheinwerfer für Fahrzeuge mit einem Gehäuse, mit einem im Inneren des Gehäuses angeordneten Abblendlicht- und einem Fernlichtmodul, mit Einstellvorrichtungen für das Abblendlichtmodul und das Fernlichtmodul, durch welche das Abblendlichtmodul zur Grundeinstellung um eine horizontale und vertikale Achse schwenkbar und das Fernlichtmodul zur Justierung um eine horizontale Achse schwenkbar ist, und mit einem zwischen Abblendlicht- und Fernlichtmodul verlaufenden Koppelelement, zwischen dem und dem Abblendlicht- und Fernlichtmodul jeweils eine gelenkartige Verbindung besteht, durch welches das Fernlichtmodul bei einem Schwenken des Abblendlichtmoduls um seine horizontale Achse um eine horizontale Achse mitschwenkt.

Ein solcher Scheinwerfer für Fahrzeuge ist aus der DE - U- 20202442 bekannt. Der Scheinwerfer weist ein aus Kunststoff bestehendes Gehäuse auf, dessen Vorderseite durch eine lichtdurchlässige Abschlussscheibe abgeschlossen ist. Im Inneren des Gehäuses ist ein Abblendlicht- und ein Fernlichtmodul angeordnet. Als Abblendlichtmodul dient ein Projektionsmodul und als Fernlichtmodul ein schalenförmiger Reflektor für Fernlicht. Die Vorderseiten des Abblendlicht- und Fernlichtmoduls sind in Lichtaustrittsrichtung zueinander versetzt angeordnet. Der Tragrahmen des Abblendlichtmoduls und des schalenförmigen Reflektors sind durch ein Koppelelement verbunden. Als Koppelelement dient ein Führungsstück, das mit Führungsflächen des Gehäuses zusammenwirkt und von den Führungsflächen vertikal gehaltert ist. Das Führungsstück haltert wiederum eine von einem Leuchtweiteregler gebildete Ei n-stellvorrichtung, die mit dem unteren Bereich des Tragrahmens des Abblendlichtmoduls gelenkig verbunden ist. Das Führungsstück haltert wiederum über den Leuchtweiteregler das Abblendlichtmodul. Durch den Leuchtweiteregler ist das Abblendlichtmodul um ein horizontale Achse schwenkbar. Die horizontale Achse ist definiert durch zwei zwischen dem oberen Bereich des Tragrahmens und dem Gehäuse bestehenden Schwenklager. Ein Schwenklager ist ortsfest ausgeführt, während das andere Schwenklager zu einer manuellen Einstellvorrichtung gehört. Durch diese Einstellvorrichtung ist das Abblendlichtmodul um eine vertikale Achse schwenkbar, die von der gelenkigen Verbindung zwischen dem Leuchtweiteregler und dem ortsfesten Schwenklager gebildet ist und die benachbart zu dem schalenförmigen Reflektor verläuft. Der schalenförmige Reflektor ist an seinem oberen Bereich über zwei Schwenklager mit dem Gehäuse verbunden. Die beiden Schwenklager sind jeweils mit einer manuellen Einstellvorrichtung gekoppelt und definieren eine horizontale Achse. Im unteren Bereich des schalenförmigen Reflektors ist das Führungsstück gelenkig mit dem Reflektor verbunden. Das Führungsstück ist zusammen mit dem Leuchtweiteregier durch eine manuelle Einstellvorrichtung, die eine mit dem Gehäuse verbundene Einstellschraube aufweist, in bzw. entgegen der Lichtaustrittsrichtung des Scheinwerfers verschiebbar. Dadurch ist das Abblendlichtmodul gemeinsam mit dem Fernlichtmodul um jeweils eine horizontale Achse manuell schwenkbar. Die beiden manuellen Einstellvorrichtungen des Fernlichtmoduls dienen zur Justierung des Fernlichtmoduls gegenüber dem Abblendlichtmodul. Das Führungsstück, welches das Fernlichtmodul mit dem Abblendlichtmodul koppelt, muss groß dimensioniert und in einer Führung des Gehäuses verschiebbar und gehaltert sein, da es die von dem Leuchtweiteregler gebildete Einstellvorrichtung und das Abblendlichtmodul trägt. Weiterhin kann wegen der großen Ausdehnung des Führungsstücks sich verziehen und ist dann nur noch schwergängig in der Führung des Gehäuses verschiebbar.

Aus der EP -A- 1 120 310 ist ein Scheinwerfer für Fahrzeuge bekanntgeworden, bei dem im Inneren des Scheinwerfers ein Abblendlichtmodul angeordnet ist, das durch eine von einem Leuchtweiteregler gebildete Einstellvorrichtung um ein horizontale Achse schwenkbar ist. Seitlich neben dem Abblendlichtmodul ist im Gehäuse eine Abstandsmesseinheit angeordnet. Die Abstandsmesseinheit ist an dem Gehäuse um zwei Schwenklager um eine horizontale Achse schwenkbar. Das Abblendlichtmodul und die Abstandsmesseinheit sind durch ein Koppelelement miteinander verbunden. Als Koppelelement dient ein Gelenkelement, das gelenkig mit dem Abblendlichtmodul und der Abstandsmesseinheit verbunden ist. Dadurch ist der Abblendlichtmodul und die Abstandsmesseinheit gemeinsam um jeweils eine horizontale Achse durch den Leuchtweiteregler schwenkbar. Das Gelenkelement besteht aus einem Gewindebolzen, der in eine an der Abstandsmesseinheit gelagerten Mutter eingreift und mit einem Kugelkopf gelenkig an dem Abblendlichtmodul gelagert ist. Dadurch ist die Abstandsmesseinheit gegenüber dem Abblendlicht justierbar. Nachteilig hierbei ist, dass die Justiervorrichtung aus vielen Einzelteilen besteht und nur durch umständlich durch eine durch einen Deckel verschließbare Gehäuseöffnung hindurch zugänglich ist. Ferner kann sich beim gemeinsamen Verstellen von Abblendlichtmodul und Abstandsmesseinheit die Justiervorrichtung mit bewegen und sich somit selbsttätig verstellen.

Aufgabe der Erfindung ist es, den im Oberbegriff des Anspruch 1 beschriebenen Scheinwerfer für Fahrzeuge derart zu verbessern, dass alle Einstellungen von dem Abblendlicht- und Fernlichtmodul des Koppelelements funktionssicher durchführbar sind. Diese Aufgabe wird nach der Erfindung dadurch gelöst, dass alle Einstellvorrichtungen für das Abblendlicht- und das Fernlichtmodul zwischen denselben und dem Gehäuse des Scheinwerfers bestehen und das Koppelelement ein Gelenkelement einer Gelenkvorrichtung ist und ausschließlich an gelenkartigen Verbindungen des Abblendlicht- und Fernlichtmoduls gehalten ist. Dadurch ist ein einfacher Aufbau des Koppelelements möglich und die zur Justierung des Fernlichtmoduls dienende Einstellvorrichtung, durch die das Fernlichtmodul um eine horizontale Achse schwenkbar ist, kann so ausgeführt sein, dass sie von der Außenseite des Gehäuse her einfach und leicht zugänglich ist. Weiterhin können der Leuchtweiteregler und die zur Justierung des Fernlichtmoduls dienende Einstellvorrichtung ohne Rücksicht auf das Koppelelement und das Koppelelement ohne Rücksicht auf den Leuchtweiteregler und die zur Justierung des Fernlichtmoduls dienende Einstellvorrichtung dimensioniert und gestaltet sein.

Das Koppelelement ist kostengünstig herstellbar, wenn es stangenförmig ausgeführt und ein einstückiges Bauteil ist.

Weiterhin ist es vorteilhaft, wenn das Koppelelement, bei in Lichtaustrittsrichtung versetzt zueinander angeordneten Vorderseiten des Abblendlicht- und Fernlichtmoduls, mindestens in einem Abschnitt zwischen den Vorderseiten verläuft, und die gelenkartigen Verbindungen der Gelenkvorrichtung an den sich benachbarten Randbereichen des Abblendlicht- und Fernlichtmoduls angeordnet sind. Dadurch baut das Koppelelement möglichst kurz und eine Dejustierung des Fernlichtmoduls durch eine Ausdehnung des Koppelelements infolge einer großen Temperaturerhöhung im Scheinwerferinneren ist sehr klein und somit nicht mehr störend. In diesem Zusammenhang ist es weiterhin vorteilhaft, wenn es entlang einer in Lichtaustrittsrichtung verlaufenden Vertikalebene verläuft und die gelenkartigen Verbindungen am vorderen und hinteren Endabschnitt des Koppelelements angeordnet sind. Dadurch ist an den gelenkartigen Verbindungen des Koppelelements beim gemeinsamen Verstellen von Abblendlichtmodul und Fernlichtmodul kein Verklemmen und Verkanten des Koppelelements möglich.

Ein weiterer Vorteil besteht, wenn eine gelenkartige Verbindung benachbart zu einem Gelenkpunkt der Einstellvorrichtung, durch die das Abblendlichtmodul um die horizontale Achse schwenkbar ist, an dem Abblendlichtmodul angeordnet ist. Durch diese Mittel ist auch bei einem leicht bauenden Abblendlichtmodul eine stabile Verbindung zwischen dem Abblendlichtmodul und dem Koppelelement gegeben. Je näher die gelenkartige Verbindung zu dem Gelenkpunkt angeordnet ist, um so leichtgängiger ist das Abblendlichtmodul um die durch den Gelenkpunkt hindurchgehende Achse schwenkbar. Besonders vorteilhaft ist es, wenn der die gelenkartige Verbindung von dem letzteren Gelenkpunkt gebildet ist.

Die Gelenkvorrichtung ist kostengünstig herstellbar und das Koppelelement ist einfach und schnell montierbar, wenn die gelenkartigen Verbindungen von einem Lagerzapfen und einer Lageröffnung gebildet sind, deren Schwenkachse quer zur Lichtaustrittrichtung des Scheinwerfers verläuft, und die Lagerzapfen und Lageröffnungen von einstückig mit Bauteilen des Abblendlichtmoduls bzw. Fernlichtmoduls ausgeführten Gelenkteilen gebildet sind.

Weiterhin ist es zweckmäßig, wenn die vertikale Achse für das Abblendlichtmodul durch Gelenkpunkte definiert ist, die am Abblendlichtmodul benachbart zum Fernlichtmodul angeordnet sind und zwischen dem Abblendlichtmodul und dem Gehäuse bestehen. Dadurch ist die Seite des Abblendlichtmoduls, die über das Koppelelement das Fernlichtmodul haltert, sicher gegen die im Fahrbetrieb auftretenden Vibrationen gehalten.

Bei einer besonders vorteilhaften Weiterbildung der Erfindung weist die dem Abblendlichtmodul zugeordnete Einstellvorrichtung, durch die das Abblendlichtmodul und das Fernlichtmodul gemeinsam um horizontale Achsen schwenkbar sind, eine Verstelleinrichtung zur Grundeinstellung des Abblendlicht- und Fernlichtmoduls und einen automatischen Leuchtweiteregler auf. Dadurch ist die Leuchtweite des Abblendlichtmoduls und des Fernlichtmoduls gemeinsam sowohl zur Grundeinstellung als auch durch den automatischen Leuchtweiteregler verstellbar. Die Verstelleinrichtung zur Grundeinstellung kann manuell oder automatisch durch den Leuchtweiteregler erfolgen.

Weiterhin ist es vorteilhaft, wenn das Fernlichtmodul ein schalenförmiger Reflektor und das Abblendlichtmodul ein Schwenkmodul für Kurvenlicht ist, wobei eine gelenkartige Verbindung des Koppelelements von einem das Kurvenlichtmodul umgebenden Rahmen gebildet ist. Da wegen der großen Masse eines Kurvenlichtmoduls sein zur Halterung dienender Rahmen stabil ausgeführt ist, ist auch das vergleichsweise leichte Fernlichtmodul über das Koppelelement sicher gegen Vibrationen gehalten.

Zwei Ausführungsbeispiele nach der Erfindung sind in der Zeichnung dargestellt und zwar zeigen

Figur 1 in einer perspektivischen Ansicht einen ersten Scheinwerfer für Fahrzeuge, bei dem ein Abblendlicht- und ein Fernlichtmodul gemeinsam durch Einstellvorrichtungen sowohl manuell als auch automatisch um horizontale Achsen schwenkbar sind, und

Figur 2 in einer perspektivischen Ansicht einen zweiten Scheinwerfer für Fahrzeuge, bei dem ein Abblendlicht- und ein Fernlichtmodul gemeinsam durch eine Einstellvorrichtung manuell um horizontale Achsen schwenkbar sind und ausschließlich das Abblendlichtmodul durch einen Leuchtweiteregler automatisch um eine horizontale Achse schwenkbar ist.

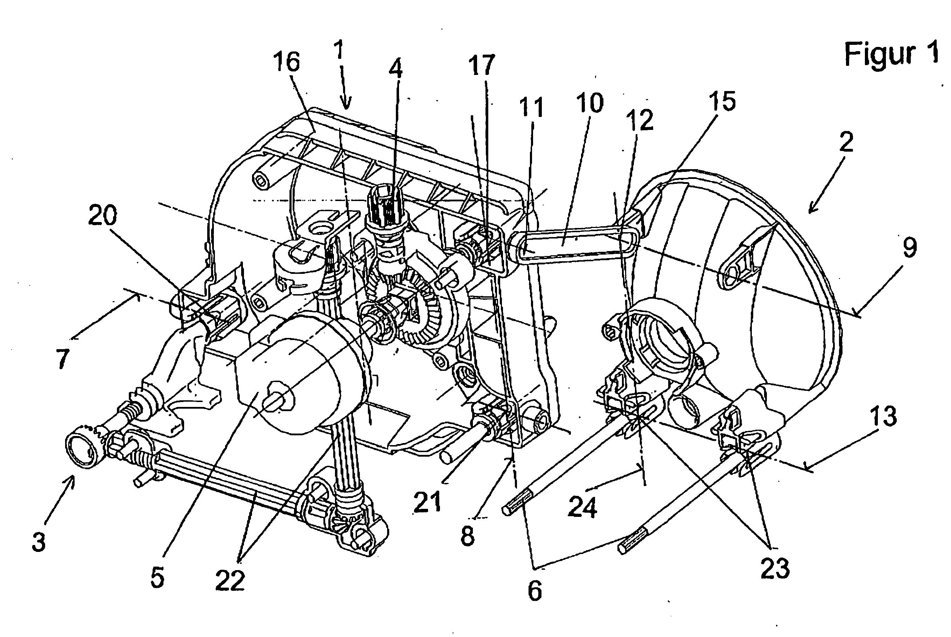

Der erste Scheinwerfer (Figur 1) für Fahrzeuge weist ein Abblendlichtmodul 1 und ein Fernlichtmodul 2 auf, welche in einem nicht dargestellten Gehäuse angeordnet sind. Die Vorderseiten 18 und 19 des Abblendlicht- und Fernlichtmoduls 1 und 2 sind in Lichtaustrittsrichtung versetzt zueinander angeordnet. Von dem Abblendlichtmodul 1 ist nur ein äußerer Rahmen 16 dargestellt. In den Rahmen 16 des Abblendlichtmoduls 1 ist ein nicht dargestelltes Schwenkmodul eingesetzt, welches für Kurvenlicht um eine vertikale Achse schwenkbar ist. Der Rahmen 16 ist über drei Gelenkpunkte 17, 20 und 21 mit dem Gehäuse verbunden. Die beiden Gelenkpunkte 17 und 21 sind in den Eckbereichen des dem Fernlichtmodul 2 nahen Randbereich des Rahmens 16 angeordnet und definieren eine vertikale Achse 8. Um die vertikale Achse 8 ist das Abblendlichtmodul 1 bzw. der Rahmen 16 durch eine dem Gelenkpunkt 20 zugeordnete manuelle Einstellvorrichtung 3 zur Grundeinstellung schwenkbar. Die Einstellvorrichtung 3 ist an dem Gehäuse gehaltert und weist eine Getriebeanordnung 22 auf, durch die eine Verstellung des Abblendlichtmoduls 1 von der oberen Seite des Gehäuses her möglich ist. Der Gelenkpunkt 20 ist an einem äußeren unteren Eckbereich des Rahmens 16 und der Gelenkpunkt 21 am inneren unteren Eckbereich des Rahmens 16 angeordnet. Die beiden Gelenkpunkte 20 und 21 definieren eine horizontale Achse 7 um die das Abblendlichtmodul 1 durch eine dem oberen Gelenkpunkt 17 zugeordnete Einstellvorrichtung 4/5 schwenkbar ist. Die Einstellvorrichtung 4/5 setzt sich zusammen aus einer von einer manuellen Verstellvorrichtung gebildeten Einstellvorrichtung 4 und einer von einem automatischen Leuchtweiteregler gebildeten Einstellvorrichtung 5. Die Einstellvorrichtung 5 ist am Gehäuse gehaltert, während die Einstellvorrichtung 4 zwischen der Einstellvorrichtung 5 und dem Gelenkpunkt 17 angeordnet ist. Das Fernlichtmodul 2 ist gegenüber dem Abblendlichtmodul 1 nach vorne hin versetzt angeordnet. Als Fernlichtmodul 2 dient ein aus Kunststoff bestehender schalenförmiger Reflektor. An den unteren Randbereich des Fernlichtmoduls 2 sind zwei Gelenkpunkte 23 angebracht, die eine horizontale Achse 13 definieren und denen eine Einstellvorrichtung 6 zugeordnet ist. Die Einstellvorrichtung 6 besteht aus zwei an dem Gehäuse gehalterten Einstellschrauben. Das Fernlichtmodul 2 ist mit dem Abblendlichtmodul 1 durch ein Koppelelement 10 verbunden. Das Koppelelement 10 ist einstückig aus Kunststoff herstellt und stangenförmig ausgeführt. Zwischen den freien Endabschnitten des Koppelelements 10 und dem Abblendlicht- und Fernlichtmodul 1 und 2 besteht jeweils eine gelenkartig Verbindung 11 bzw. 12. Die gelenkartige Verbindung 11 ist nahe dem Gelenkpunkt 17 und die gelenkartig Verbindung 12 in dem dem Rahmen 16 benachbarten oberen Randbereich des Fernlichtlichtmoduls 2 angeordnet. Die gelenkartigen Verbindung 11 und 12 bestehen aus einem Lagerzapfen und einer Lageröffnung (nicht dargestellt). Der Lagerzapfen weist eine ballige Mantelfläche auf, ist in seiner Längsausdehnung geschlitzt und weist an seine beiden freien Endabschnitten jeweils eine Rastnase auf, die die Lageröffnung selbsttätig hintergreift. Die Lageröffnungen sind in eine äußere Wand des Rahmens 16 eingebracht. Bei einem manuellen oder automatischen Schenken des Abblendlichtmoduls 1 durch die Einstellvorrichtung 4/5 um die horizontale Achse 7 schwenkt das Fernlichtmodul 2 wegen dem Koppelelement 10 um die horizontale Achse 13. Die beiden an dem Gehäuse gehalterten Einstellschrauben der Einstellvorrichtung 6 sind von der Außenseite des Gehäuses her einfach und leicht zugänglich und schwenken das Fernlichtmodul bei gleichzeitiger Betätigung um die horizontale Achse 9, die durch die gelenkartige Verbindung 12 definiert ist. Dadurch ist das Fernlichtmodul 2 gegenüber dem Abblendlichtmodul 1 justierbar. Beim Verstellen der äußeren Einstellschraube der Einstellvorrichtung 6 ist schwenkt das Fernlichtmodul 2 um eine vertikale Achse 24, die durch den inneren Gelenkpunkt 23 und die gelenkartige Verbindung 12 hindurchgeht. Die äußere Einstellschraube der Einstellvorrichtung 6 dient somit der Grundeinstellung des Fernlichtmoduls 2. Der Abstand der gelenkartigen Verbindung 11 zur horizontalen Achse 7 des Abblendlichtmoduls 1 und der Abstand der gelenkartige Verbindung 12 zur horizontalen Achse des 13 des Fernlichtmoduls 2 sind gleich groß.

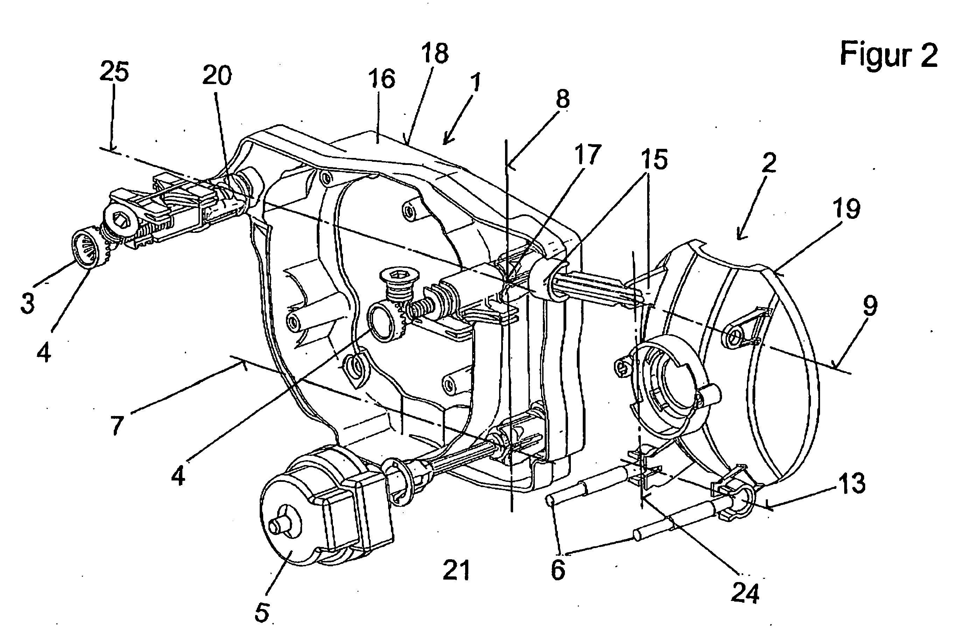

Der zweite Scheinwerfer (Figur 2) unterscheidet sich gegenüber dem ersten Scheinwerfer (Figur 1) durch nachstehend beschriebene Merkmale. Der automatische Leuchtweiteregler der Einstellvorrichtung 5 ist dem unteren Gelenkpunkt 21 zugeordnet und der Gelenkpunkt 20 ist in dem äußeren oberen Eckbereich des Rahmens 16 angeordnet. Dadurch schwenkt der Leuchtweiteregler der Einstellvorrichtung 5 ausschließlich das Abblendlichtmodul 1 um eine horizontale Achse 25, die durch die oberen Gelenkpunkte 17 und 20 hindurchgeht. Beim manuellen Einstellen des Abblendlichtmoduls 1 durch die Einstellvorrichtung 4 schenkt dieser um die horizontale Achse 7, die nur durch den unteren Gelenkpunkt 21 hindurchgeht. Die Einstellvorrichtung 4 ist mit jeweils einer Einstellschraube den Gelenkpunkten 17 und 20 zugeordnet.

### Bezugszeichenliste:

- 1.: Abblendlichtmodul
- 2.: Fernlichtmodul
- 3.: Einstellvorrichtung
- 4.: Einstellvorrichtung
- 5.: Einstellvorrichtung
- 6.: Einstellvorrichtung
- 7.: horizontale Achse
- 8.: vertikale Achse
- 9.: horizontale Achse
- 10.: Koppelelement
- 11.: gelenkartige Verbindung
- 12.: gelenkartige Verbindung
- 13.: horizontale Achse
- 14.: Gelenkvorrichtung
- 15.: Bauteil
- 16.: Rahmen
- 17.: Gelenkpunkt
- 18.: Vorderseite
- 19.: Vorderseite
- 20.: Gelenkpunkt
- 21.: Gelenkpunkt
- 22.: Getriebeanordnung
- 23.: Gelenkpunkt
- 24.: vertikale Achse
- 25.: horizontale Achse

## Patentansprüche

1. Scheinwerfer für Fahrzeuge mit einem Gehäuse, mit einem im Inneren des Gehäuses angeordneten Abblendlicht- und einem Fernlichtmodul (1 und 2), mit Einstellvorrichtungen (3, 4 und 5) für das Abblendlicht- und Fernlichtmodul (1 und 2), durch welche das Abblendlichtmodul (1) zur Grundeinstellung um eine horizontale und vertikale Achse (7 und 8) schwenkbar ist, und mit einer Einstellvorrichtung (6), durch welche das Fernlichtmodul (2) zur Justierung um eine horizontale Achse (9) schwenkbar ist und welche zwischen dem Fernlichtmodul (2) und dem Gehäuse des Scheinwerfers besteht, und mit einem zwischen Abblendlicht- und Fernlichtmodul (1 und 2) verlaufenden Koppelelement (10), zwischen dem und dem Abblendlicht- und Femlichtmodul (1 und 2) jeweils eine gelenkartige Verbindung (11 und 12) besteht, durch welches das Fernlichtmodul (2) bei einem Schwenken des Abblendlichtmoduls um seine horizontale Achse (7) um eine horizontale Achse (13) mitschwenkt, **dadurch gekennzeichnet, dass** sowohl die Einstellvorrichtungen (3, 4 und 5) für das Abblendlichtmodul (1), durch welche das Abblendlichtmodul (1) zur Grundeinstellung um eine horizontale und vertikale Achse (7 und 8) schwenkbar ist, als auch die Einstellvorrichtung (6) für das Fernlichtmodul (2), durch welche das Fernlichtmodul (2) zur Justierung um eine horizontale Achse (9) schwenkbar ist, zwischen dem Abblendlicht- bzw. Fernlichtmodul (1 bzw. 2) und dem Gehäuse des Scheinwerfers bestehen und das Koppelelement (10) ein Gelenkelement einer Gelenkvorrichtung (14) ist und ausschließlich an den gelenkartigen Verbindungen (11 und 12) des Abblendlicht- und Fernlichtmoduls (1 und 2) gehalten ist.

2. Scheinwerfer nach Anspruch 1, **dadurch gekennzeichnet, dass** das Koppelelement der Gelenkvorrichtung (14) stangenförmig ausgeführt und ein einstückiges Bauteil ist.

3. Scheinwerfer nach Anspruch 1 oder 2, **dadurch gekennzeichnet, dass** das Koppelelement (10), bei in Lichtaustrittsrichtung versetzt zueinander angeordneten Vorderseiten (18 und 19) des Abblendlicht- und Fernlichtmoduls (1 und 2), mindestens mit einem Abschnitt zwischen den Vorderseiten (18 und 19) verläuft.

4. Scheinwerfer nach einem der Ansprüche 1 bis 3, **dadurch gekennzeichnet, dass** das stangenartige Koppelelement (10) entlang einer in Lichtaustrittsrichtung verlaufenden Vertikalebene verläuft und die gelenkartigen Verbindungen (11 und 12) am vorderen und hinteren Endabschnitt des Koppelelements (10) angeordnet sind.

5. Scheinwerfer nach einem der Ansprüche 1 bis 4, **dadurch gekennzeichnet, dass** eine gelenkartige Verbindung (11) benachbart zu einem Gelenkpunkt (17) der Einstellvorrichtung (4), durch die das Abblendlichtmodul (1) um die horizontale Achse (7) schwenkbar ist, an dem Abblendlichtmodul (1) angeordnet ist.

6. Scheinwerfer nach Anspruch 5, **dadurch gekennzeichnet, dass** eine Schwenkachse der gelenkartigen Verbindung (11) durch den Gelenkpunkt (17) hindurchgeht.

7. Scheinwerfer nach Anspruch 5 oder 6, **dadurch gekennzeichnet, dass** der die gelenkartige Verbindung (11) von dem Gelenkpunkt (17) gebildet ist.

8. Scheinwerfer nach einem der Ansprüche 1 bis 7, **dadurch gekennzeichnet, dass** die gelenkartigen Verbindungen (11 und 12) von einem Lagerzapfen und einer Lageröffnung gebildet sind, deren Schwenkachse quer zur Lichtaustrittrichtung des Scheinwerfers verläuft.

9. Scheinwerfer nach einem der Ansprüche 1 bis 8, **dadurch gekennzeichnet, dass** die Lagerzapfen und Lageröffnungen von einstückig mit Bauteilen (15) des Abblendlichtmoduls (1) bzw. Fernlichtmoduls (2) ausgeführten Gelenkteilen gebildet sind.

10. Scheinwerfer nach einem der Ansprüche 1 bis 9, **dadurch gekennzeichnet, dass** die vertikale Achse (8) für das Abblendlichtmodul (1) durch Gelenkpunkte (16) definiert ist, die am Abblendlichtmodul (1) benachbart zum Fernlichtmodul (2) angeordnet sind und zwischen dem Abblendlichtmodul (1) und dem Gehäuse bestehen.

11. Scheinwerfer nach einem der Ansprüche 1 bis 10, **dadurch gekenn-zeichnet, dass** die dem Abblendlichtmodul (1) zugeordnete Einstellvorrichtung (4/5), durch die das Abblendlichtmodul (1) und das Femlichtmodul (2) um horizontale Achsen (7 und 13) und gemeinsam schwenkbar sind, eine Verstelleinrichtung (4) zur Grundeinstellung des Abblendlicht- und Fernlichtmoduls (1 und 2) aufweist.

12. Scheinwerfer nach Anspruch 11, **dadurch gekennzeichnet, dass** die dem Abblendlichtmodul (1) zugeordnete Einstellvorrichtung (4/5), durch die das Abblendlicht- und Femlichtmodul (1 und 2) um horizontale Achsen (7 und 13) schwenkbar sind, einen automatischen Leuchtweiteregler (5) aufweist.

13. Scheinwerfer nach einem der Ansprüche 1 bis 12, **dadurch gekennzeichnet, dass** das Fernlichtmodul (2) ein schalenförmiger Reflektor und das Abblendlichtmodul (1) ein Schwenkmodul für Kurvenlicht ist, wobei eine gelenkartige Verbindung (11) des Koppelelements (10) an einem das Kurvenlichtmodul umgebenden Rahmen (16) angeordnet ist.

14. Scheinwerfer nach einem der Ansprüche 1 bis 13, **dadurch gekenn-zeichnet, dass** die Einstellvorrichtung (6) für das Fernlichtmodul (2) von der Außenseite des Gehäuses her zugänglich ist.

## Claims

1. Headlamp for vehicles with a housing, a low beam module and a high beam module (1 and 2) located inside the housing, with adjustment devices (3, 4 and 5, 6) for adjusting the low beam module and the high beam module (1 and 2) such that the low beam module (1) is made to turn around a horizontal and a vertical axis (7 and 8) to attain its neutral position, and with an adjustment device (6) which makes the high beam module (2) turn around a horizontal axis (9) for adjustment which is between the high beam module (2) and the housing of the headlamp, and with a coupling element (10) between the low beam module and the high beam module (1 and 2) which is connected to both the low beam module and the high beam module (1 and 2) by an articulated link (11 and 12) which makes the high beam module (2) turn around a horizontal axis (13) when the low beam module turns around its horizontal axis (7), **characterized in that** both the adjustment devices (3, 4 and 5) for the low beam module (1) which allow the low beam module (1) to be turned around a horizontal and vertical axis (7 and 8) to attain its neutral position, and the adjustment device (6) for the high beam module (2) which allows the high beam module (2) to be turned around a horizontal axis (9) for adjustment connect the low beam module (1) on the one hand and the high beam module (2) on the other with the housing of the headlamp and that the coupling element (10) is an articulated link of a linkage mechanism (14) which is only held by the articulated links (11 and 12) of the low beam module (1) and the high beam module (2).

2. Headlamp of claim 1, **characterized in that** the coupling element of the linkage mechanism (14) is a single-part component made in the shape of a rod.

3. Headlamp of claim 1 or 2, **characterized in that** at least one section of the coupling element (10) is located between the front sides (18 and 19) of the low beam module (1) and the high beam module (2) when these front sides (18 and 19) are at an offset in the direction of light exit.

4. Headlamp as in one of claims 1 to 3, **characterized in that** the rod-like coupling element (10) cuts vertically across the axis of the direction of light exit and that the articulated links (11 and 12) are located at the front and rear terminal sections of the coupling element (10).

5. Headlamp of claims 1 to 4, **characterized in that** an articulated link (11) is attached to the low beam module (1) adjacent to a junction point (17) of the adjustment mechanism (4) which allows the low beam module (1) to be turned around the horizontal axis (7).

6. Headlamp of claim 5, **characterized in that** a rotation axis of the articulated link (11) cuts through the junction point (17).

7. Headlamp of claim 5 or claim 6, **characterized in that** the articulated link (11) is provided by the junction point (17).

8. Headlamp of claims 1 to 7, **characterized in that** the articulated joints (11 and 12) are made up of a journal and bearing cup each whose axis of rotation is diagonally across the direction of the headlamp light.

9. Headlamp of claims 1 to 8, **characterized in that** the journals and bearing cups are made up of link parts which are made up of single-part components (15) of the low beam module (1) or the high beam module (2).

10. Headlamp of claims 1 to 9, **characterized in that** the vertical axis (8) of the low beam module (1) is defined by junction points (16) attached to the low beam module (1) adjacent to the high beam module (2) and located between the low beam module (1) and the housing.

11. Headlamp of claims 1 to 10, **characterized in that** the adjustment mechanism (4/5) allocated to the low beam module (1) which allows the low beam module (1) and the high beam module (2) to be turned together around horizontal axes (7 and 13) features an adjustment mechanism (4) for resetting the low beam module (1) and the high beam module (2) to their normal positions.

12. Headlamp of claim 11, **characterized in that** the adjustment mechanisms (4/5) allocated to the low beam module (1) which allow the low beam module (1) and the high beam module (2) to be turned around horizontal axes (7 and 13) features an automatic headlamp leveling system (5).

13. Headlamp of claims 1 to 12, **characterized in that** the high beam module (2) is a dish-shaped reflector and the low beam module (1) is a projector gr for bend lighting where an articulated link (11) of the coupling element (10) is connected to a frame (16) around the bend lighting module.

14. Headlamp of claims 1 to 13, **characterized in that** the adjustment mechanism (6) for the high beam module (2) can be accessed from the outside of the housing.

## Revendications

1. Projecteur pour véhicules, comprenant un boîtier, avec un module de feu de croisement (1) et un module de feu de route (2) disposés à l'intérieur du boîtier, avec des dispositifs de réglage (3, 4 et 5) du module de feu de croisement (1) et du module de feu de route (2) qui permettent de faire pivoter le module de feu de croisement (1) autour d'un axe horizontal (7) et vertical (8) pour le réglage de base, et avec un dispositif de réglage (6) qui permet de faire pivoter le module de feu de route (2) autour d'un axe horizontal (9) pour l'alignement et qui est disposé entre le module de feu de route (2) et le boîtier du projecteur, et avec un élément d'accouplement (10), qui s'étend entre le module de feu de croisement (1) et le module de feu de route (2) et entre lequel et les modules de feu de croisement et de feu de route (1 et 2) se trouve respectivement une liaison articulée (11 et 12), qui entraîne le module de feu de route (2) en rotation autour d'un axe horizontal (13) lorsque le module de feu de croisement pivote autour de son axe horizontal (7), **caractérisé en ce que** les dispositifs de réglage (3, 4 et 5) du module de feu de croisement (1), qui permettent de faire pivoter le module de feu de croisement (1) autour d'un axe horizontal (7) et vertical (8) pour le réglage de base, de même que le dispositif de réglage (6) du module de feu de route (2), qui permet de faire pivoter le module de feu de route (2) autour d'un axe horizontal (9) pour l'alignement, se trouvent entre le module de feu de croisement (1) ou le module de feu de route (2) et le boîtier du projecteur et **en ce que** l'élément d'accouplement (10) est un élément d'articulation d'un système articulé (14) et est fixé exclusivement sur les liaisons articulées (11 et 12) du module de feu de croisement (1) et du module de feu de route (2).

2. Projecteur selon la revendication 1, **caractérisé en ce que** l'élément d'accouplement du système articulé (14) est réalisé en forme de tige et constitue un composant d'une seule pièce.

3. Projecteur selon la revendication 1 ou la revendication 2, **caractérisé en ce que**, lorsque les faces avant (18 et 19) du module de feu de croisement (1) et du module de feu de route (2) sont disposées de manière décalée l'une par rapport à l'autre dans le sens de sortie de la lumière, une section au moins de l'élément d'accouplement (10) s'étend entre les faces avant (18 et 19).

4. Projecteur selon l'une des revendications 1 à 3, **caractérisé en ce que** l'élément d'accouplement en forme de tige (10) s'étend dans un plan vertical qui s'étend dans le sens de sortie de la lumière et **en ce que** les liaisons articulées (11 et 12) sont disposées dans la partie d'extrémité avant et arrière de l'élément d'accouplement (10).

5. Projecteur selon l'une des revendications 1 à 4, **caractérisé en ce qu'**une liaison articulée (11) est disposée sur le module de feu de croisement (1) au voisinage d'un point d'articulation (17) du dispositif de réglage (4) qui permet de faire pivoter le module de feu de croisement (1) autour de l'axe horizontal (7).

6. Projecteur selon la revendication 5, **caractérisé en ce qu'**un axe de pivotement de la liaison articulée (11) passe par le point d'articulation (17).

7. Projecteur selon la revendication 5 ou la revendication 6, **caractérisé en ce que** la liaison articulée (11) est formée par le point d'articulation (17).

8. Projecteur selon l'une des revendications 1 à 7, **caractérisé en ce que** les liaisons articulées (11 et 12) sont formées par un tourillon et par une ouverture d'appui dont l'axe de pivotement est perpendiculaire au sens de sortie de la lumière du projecteur.

9. Projecteur selon l'une des revendications 1 à 8, **caractérisé en ce que** les tourillons et les ouvertures d'appui sont formées par des pièces d'articulation réalisées d'un seul tenant avec des composants (15) du module de feu de croisement (1) ou du module de feu de route (2).

10. Projecteur selon l'une des revendications 1 à 9, **caractérisé en ce que** l'axe vertical (8) du module de feu de croisement (1) est défini par des points d'articulation (16) qui sont disposés sur le module de feu de croisement (1) au voisinage du module de feu de route (2) et qui se trouvent entre le module de feu de croisement (1) et le boîtier.

11. Projecteur selon l'une des revendications 1 à 10, **caractérisé en ce que** le dispositif de réglage (4/5) associé au module de feu de croisement (1), permettant de faire pivoter le module de feu de croisement (1) et le module de feu de route (2) autour d'axes horizontaux (7 et 13) et ensemble, présente un système ajustable (4) pour le réglage de base du module de feu de croisement (1) et du module de feu de route (2).

12. Projecteur selon la revendication 11, **caractérisé en ce que** le dispositif de réglage (4/5) associé au module de feu de croisement (1), permettant de faire pivoter le module de feu de croisement (1) et le module de feu de route (2) autour d'axes horizontaux (7 et 13), présente un régulateur automatique de la portée d'éclairage (5).

13. Projecteur selon l'une des revendications 1 à 12, **caractérisé en ce que** le module de feu de route (2) est un réflecteur en forme de bol et le module de feu de croisement (1) est un module pivotant pour l'éclairage dans les virages, une liaison articulée (11) de l'élément d'accouplement (10) étant disposée sur un cadre (16) entourant le module d'éclairage dans les virages.

14. Projecteur selon l'une des revendications 1 à 13, **caractérisé en ce que** le dispositif de réglage (6) du module de feu de route (2) est accessible de l'extérieur du boîtier.
